# EUROPÄISCHE PATENTSCHRIFT

(11) **EP 1 318 656 B1**
(45) Veröffentlichungstag und Bekanntmachung des Hinweises auf die Patenterteilung: **06.05.2015**
(21) Anmeldenummer: 02024261.6
(22) Anmeldetag: 31.10.2002
(51) Int. Cl.: H04M 3/42, H04M 7/00

(54) **Eindeutige Identifikation von Ressourcen einer Nebenstellenanlage in einem Anlagenverbund mit Telefonie-Server**
Unique identification of resources of a PBX system in a PBX network with telephony server
Identification unique des ressources d'un PBX dans un réseau PBX avec un server de téléphonie

(30) Priorität: 05.12.2001 DE 10159665
(43) Veröffentlichungstag der Anmeldung: 11.06.2003
(73) Patentinhaber: Unify GmbH & Co. KG, 81379 München (DE)
(72) Erfinder: Rist, Claus, 44795 Bochum (DE); Schroeter, Otto, 45307 Essen (DE)
(74) Vertreter: Fritzsche, Thomas

(56) Entgegenhaltungen:
- WO-A-96/27266
- "NetWare Telephony Services Application Programming Interface (TSAPI) Version 2, Issue 3.0, pages 1-580" April 1998 (1998-04) , NOVELL INC., LUCENT TECHNOLOGIES INC. XP002267338 * Seite 3-8 - Seite 3-11 *
- "Standard ECMA-217; Services for Computer Supported Telecommunications Applications (CSTA) Phase II; pages 1-160" Dezember 1994 (1994-12) , ECMA XP002266927 * Seite 12 - Seite 13 *
- "3.9 Networked Switching and Third Party" In: Walters, Rob: "Computer Telephony Integration", January 1999 (1999-01), Artech House Publishers, XPXP007916035, ISBN: 0890069697

## Beschreibung

Die Erfindung betrifft ein System zum Zugriff auf Ressourcen gemäß dem Oberbegriff des Anspruchs 1 sowie ein Verfahren zum Betreiben dieses Systems gemäß Oberbegriff von Anspruch 7.

Anordnungen, bei denen auf Rechnern installierte Anwendungen die Teilnehmer an Kommunikationsanlagen steuern und/oder überwachen, sind als CTI-Systeme (CTI = Computer Telephony Integration) bekannt. Zwischen den Anwendungen und einer Kommunikationsanlage ist dabei ein Telefonie-Server, oftmals auch als CTI-Server bezeichnet, geschaltet. Dabei besteht eine Datenverbindung zwischen jeder Kommunikationsanlage und dem CTI-Server und jeweils eine Datenverbindung zwischen den verschiedenen Anwendungen und dem CTI-Server. Die Anwendungen kommunizieren also nicht auf direktem Wege sondern mit Hilfe eines CTI-Servers mit den Kommunikationsanlagen. Man spricht häufig auch von Third-Party-CTI-Systemen.

CTI-Systeme sind beispielsweise aus Walters, Rob: "Computer Telephony Integration", Januar 1999 (1999-01), Artech House Publishers, XP007915035, IS3N: 0890069697, Abscchnitt "3.9 Networked Switching and Third Party", Seiten 144 bis 146
und aus dem Standard
"NetWare Telephony Services Application Programming Interface (TSAPI) Version 2", Issue 3.0, Seiten 1-580 (04-1998), XPO02267338, insbesondere Seiten 1 bis 18 bekannt.

Die an den Kommunikationsanlagen angeschlossenen Teilnehmer werden anhand von Kennzeichen voneinander unterschieden. Ein gebräuchliches Kennzeichen ist dabei die Durchwahlnummer, die für die Teilnehmen einer einzelnen Kommunikationsanlage immer eindeutig ist, d. h. jeder Durchwahlnummer ist genau ein Teilnehmer zugeordnet. Das trifft im übrigen nicht nur für die Teilnehmer im klassischen Sinne, also für Telefonanschlüsse zu, sondern auch für Amtsleitungen, Ansageports, Sammelanschlüsse und dergleichen. Für alle diese Teilnehmer wird der allgemeine Begriff Ressource verwendet.

Zum Steuern und/oder Überwachen von Ressourcen durch Anwendungen werden zwischen den Anwendungen und der Kommunikationsanlage, an der die entsprechende Ressource betrieben wird, Meldungen übertragen. Ein wesentlicher Bestandteil der Meldungen ist immer das Kennzeichen der betreffenden Ressource, um der Meldung die richtige Ressource zuordnen zu können, sowohl von der Kommunikationsanlage als auch von der Anwendung aus. Das einer Ressource zugeordnet Kennzeichen wird häufig auch als Ressource-ID (engl.: ID = identification) bezeichnet. Wenn mehrere Kommunikationsanlagen an einem CTI-Server angeschlossen sind, benutzt der CTI-Server die Ressource-ID, um eine von der Anwendung verschickte Meldung an diejenige Kommunikationsanlage weiterzuleiten, an der die entsprechende Ressource angeschaltet ist. Auf umgekehrten Wege überträgt der CTI-Server die von den Kommunikaticnsanlagen kommenden Meldungen an diejenige Anwendung oder an alle die Anwendungen, die zum Zugriff auf die entsprechende Ressource vorgesehen sind. Diese Zuordnungen sind im CTI-Server konfigurierbar. Dadurch, dass die Meldungen verschiedener Kommunikationsanlagen im CTI-Server zusammengeführt und über eine einzige Datenverbindung zur entsprechenden Anwendung oder den entsprechenden Anwendungen übertragen wird, ergibt sich aus Sicht der Anwendung ein sogenanntes One-System-Image, d. h. die Anwendungen unterscheiden nicht, ob die verschiedenen Ressourcen an einer einzelnen oder an verschiedenen Kommunikationsanlagen angeschaltet sind. Jede Anwendung unterscheidet die Ressourcen lediglich anhand der Ressource-ID. Da die Ressource-ID häufig mit der Durchwahlnummern des entsprechende Anschlusses an der Kommunikationsanlage identisch ist, spricht man auch davon, dass das Steuern und/oder Überwachen, das sogenannte Call-Control, "line-bezogen" (englisch: line = Leitung) durchgeführt wird.

Bei den bestehenden Systemen hat es sich als nachteilig herausgestellt, dass bei einer Steuerung und/oder Überwachung von Ressourcen mehrerer Kommunikationsanlagen die Ressource-IDs nicht nur bezüglich einer einzelnen Kommunikationsenlage, sondern bezüglich aller Kommunikationsanlagen, an denen solche Ressourcen angeschlossen sind, eindeutig sein müssen. Falls die Ressource-IDs wie üblich aus den Durchwahlnummern gebildet werden, müssen alle Ressourcen, also auch alle Teilnehmer des CTI-Systems eindeutige Durchwahlnummern halben. In CTI-Systemen für Kommunikationsnetze mit mehreren Kommunikationsanlagen und mit vielen Teilnehmern führt das zu unhandlich langen Durchwahlnummern.

Aufgabe der Erfindung ist es, in einem System mit mindestens zwei Kommunikationsanlagen, deren Ressourcen von mindestens einer Anwendung mittels Meldungen steuerbar und/oder überwachbar sind, für die Benutzer oder Teilnehmer sicherzustellen, daß die innerhalb einer Kommunikationsanlage gut handhabbaren Kennzeichen (z.B. Kurzdurchwahlnummern) auch bei mehreren oder bei Hinzuschaltung weiterer Kommunikationsanlagen beibehalten werden können.

Die Lösung dieser Aufgabe ist durch die in Anspruch 1 angegebenen Merkmale sowie durch das Verfahren von Anspruch 7 gegeben. Durch die kennzeichnende Merkmale der Unteransprüche ist das System in vorteilhafter Weise weiter ausgestaltet.

Die Lösung dieser Aufgabe sieht vor, dass eine Erweiterung aller Kennzeichen zur Unterscheidung der Ressourcen vorgesehen ist, die zumindest von jeder Kommunikationsanlage beim Versenden von Meldungen vorgenommen wird und eine eindeutige Kennung der versendenden Kommunikationsanlagen umfasst, zumindest jeweils dann, wenn mehrere Ressourcen das gleiche nicht erweiterte Kennzeichen aufweisen.

CTI-Systeme aus mehreren Kommunikationsanlagen und mehreren Anwendungen lassen sich flexibel und erweiterbar aufbauen, wenn die Kommunikationsanlagen die Meldungen mit der mindestens einen Anwendung über einen Telefonie-Server austauschen.

Das Format zur Übertragung von Kennzeichen zu Anwendungen kann flexibel an die Erfordernisse unterschiedlicher Anwendungen angepasst werden, indem die Kennung zur Erweiterung der Meldungen, die von den Kommunikationsanlagen zum Telefonie-Server übertragen werden, vom Telefonie-Server in eine andere Kennung umgesetzt und zusammen mit den Meldungen zu der mindestens einen Anwendung übertragen wird.

Vorhandene Anwendungen, die Ressourcen ausschliesslich anhand der zugeordneten Rufnummer unterscheiden, können weiterverwendet werden, indem der Telefonie-Server die Kennung dazu verwendet, der mindestens einen Anwendung die Meldungen mit einem Kennzeichen versehen zu übermitteln, welches die Rufnummer der Ressource in internationalem Format umfasst.

Wenn mindestens eine Anwendung eine CTI-Anwendung (CTI = Computer Telephony Integration) ist, lassen sich von den Anwendungen aus Verbindungen der Telephonie-Endgeräte einfach aufbauen.

Ein grosser Funktionsumfang im Call-Control ist realisierbar, indem die mindestens eine Anwendung die Meldungen in einem im TAPI-Protokoll (TAPI = Telephony Application Programming Interface) oder CSTA-Phase-III-Protokoll (CSTA = Computer Supported Telephony Application) definierten Datenformat austauscht.

Ein Einsatz von Kommunikationsanlagen und Telefonie-Servern aus erfindungsgemässen Systemen auch in bewährten Netzen, die nach dem Stand der Technik verfahren, ist dadurch möglich, dass die Nutzung oder Nichtnutzung erweiterter Kennzeichen im Telefonie-Server und den Kommunikationsanlagen als Betriebsmodus auswählbar ist.

Bei Veränderungen in Netzen können Anwendungen den bestmöglichen Betriebszustand selbsttätig einstellen, wenn die Möglichkeit der Nutzung von Kennzeichen, die um die Kennung erweitert sind, von der zumindest eine Anwendung bei dem Telefonie-Server oder bei einer Kommunikationsanlage abgefragt werden kann und die Nutzung der Erweiterung der Kennzeichen von der zumindest einen Anwendung an- und abschaltbar ist.

Die Funktionalität von Systemen aus Kommunikationsanlagen, Telefonie-Server und Anwendungen ist in bewährtem Umfang gegeben, indem das nicht erweiterte Kennzeichen der Ressource in einem Datenformat dargestellt ist, welches dem SFR-Format (SFR = Switching Function Representation) des Standards ECMA-269 entspricht.

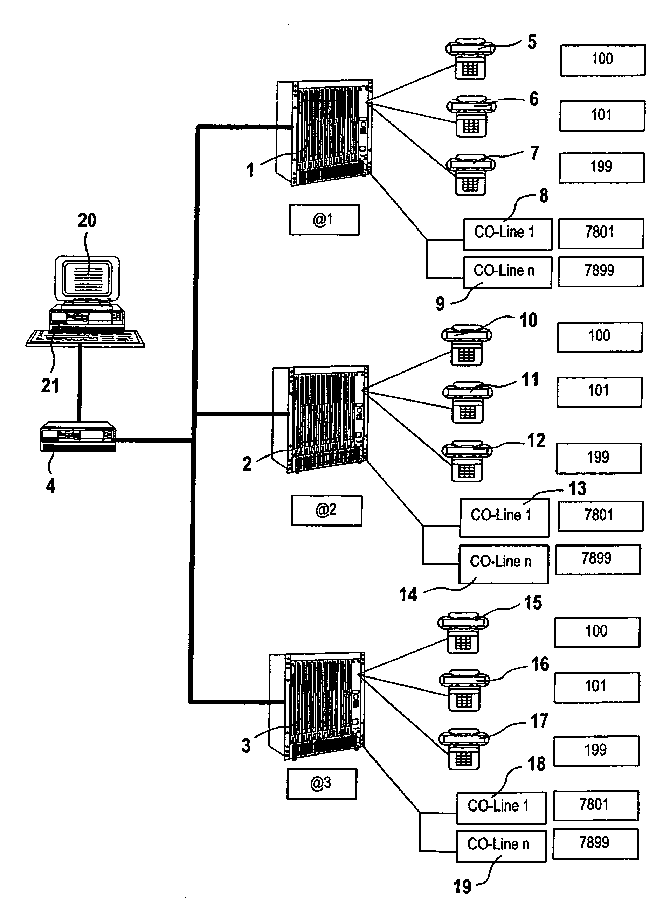

Ein Ausführungsbeispiel des erfindungsgemässen Systems wird nachfolgend anhand der Zeichnung beschrieben. Dabei zeigt die einzige Figur in schematischer Darstellung einen Telephonie-Server, an den drei Kommunikationsanlagen angeschlossen sind, deren Ressourcen jeweils gleiche Durchwahlnummern aufweisen.

In dieser Figur ist ein CTI-System in einer Anordnung gezeigt, in der Kommunikationsanlagen 1, 2, 3 über ein paketvermitteltes Netzwerk (IP-Netz; IP = Internet Protokoll) mit einem Telephonie-Server 4 verbunden sind. An den Kommunikationsanlagen 1, 2, 3 sind Ressourcen 5-19 angeschlossen, wobei die Ressourcen 5-7, 10-12, 15-17 Telefonie-Teilnehmer und die Ressourcen 8, 9, 13, 14, 18, 19 Amtsleitungen sind (englisch: CO-Line = Central Office Line). In der Figur sind die Kommunikationsanlagen 1, 2, 3 jeweils mit einer fortlaufenden Bezeichnung @1-@3 gekennzeichnet. Bereiche, die aus einer Kommunikationsanlage 1, 2, 3 und den zugeordneten Ressourcen 5-9, 10-14, 15-19 bestehen, werden auch als Kommunikationsknoten (engl.: node) und somit die fortlaufende Bezeichnung @1-@3 der Kommunikationsanlagen 1, 2, 3 auch als Node-ID bezeichnet. In der Figur sind ferner die den Ressourcen 5-19 als Kennzeichen zugeordneten Durchwahlnummern 100-7899 eingetragen.

Am Telephonie-Server 4 sind weiter Anwendungen (ebenfalls über ein IP-Netzwerk) angeschlossen, die auf PCs 21 installiert sind.

Als Beispiel soll eine am Telephonie-Server 4 angeschlossene Anwendung 20 den Teilnehmer mit der Durchwahlnummer 100 überwachen, der an der Kommunikationsanlage 1 angeschlossen ist. Die zugehörige Ressource 5 hat hierbei also als Kennzeichen oder Ressource-ID die Durchwahlnummer 100. Die Überwachung der Ressource 5 durch die Anwendung 20 beinhaltet, dass eine Änderung des Status des Teilnehmers der Anwendung 20 signalisiert wird, wenn dieser beispielsweise vom Zustand frei zum Zustand besetzt wechselt.

Dazu wird in der Kommunikationsanlage 1 zunächst eine Überwachung der Ressource 5 gestartet. Man spricht dabei auch vom "Setzen eines Monitorpunkts"; der Vorgang des Überwachens wird analog auch "Monitoring" genannt. Um in der Kommunikationsanlage 1 den Monitorpunkt für die Ressource 5 zu setzen, überträgt die Anwendung 20 eine Meldung zum Telephonie-Server 4. Die Meldung umfasst eine Kennung, aus der hervorgeht, welche der Ressourcen 5-19 der Kommunikationsanlage 1 zu überwachen ist. Als Kennzeichen überträgt die Anwendung 20 die vollständige Rufnummer der Ressource 5 im internationalen Format, das eine Landesvorwahl, eine Ortsnetzvorwahl, eine Anlagenrufnummer und die Durchwahlnummer 100 der Ressource 5 umfasst. Dieses Format der vollständigen internationalen Rufnummer nennt man auch das kanonische Nummernformat. Der Telephonie-Server 4 unterscheidet anhand der in der vollständigen Rufnummer im kanonischen Format enthaltenen Informationen, in welcher der Kommunikationsanlagen 1, 2, 3 der Monitorpunkt gesetzt werden muss. Dies ist notwendig, weil die Durchwahlnummer 100 zugleich mehreren Ressourcen 5, 10, 15 unterschiedlicher Kommunikationsanlagen 1, 2, 3 zugeordnet ist (überlappende Durchwahlnummern). Die Zuordnung der in den Rufnummern im kanonischen Format implizit enthaltenen Standortinformation zu den Kommunikationsanlagen 1, 2, 3 kann im Telephonie-Server 4 anhand einer Tabelle ausgewertet werden. Nun baut der Telephonie-Server 4 eine Verbindung zur Kommunikationsanlage 1 auf, überträgt die Meldung, dass ein Monitorpunkt gesetzt werden soll und ergänzt diese Meldung mit der Ressource-ID 100, die das in dieser Kommunikationsanlage 1 eindeutige Kennzeichen für die Ressource 5 darstellt. Damit ist der Überwachungsvorgang für den Telefonie-Teilnehmer mit der Durchwahlnummer 100 gestartet.

Sobald sich der Status der Ressource 5 ändert, beispielsweise bei einem eingehenden Anruf, generiert die Kommunikationsanlage 1 eine entsprechende Meldung. Diese Meldung umfasst neben einer Zeichenfolge, die die Statusänderung beschreibt, das Kennzeichen der Ressource 5. Dieses Kennzeichen ist zunächst identisch mit der Durchwahlnummer der Ressource 5, also 100. Zur Übertragung der Meldung wird das Kennzeichen um die Node-ID der Kommunikationsanlage 1 erweitert, die mit @1 bezeichnet ist. Die so erweiterte Meldung wird nun zum Telephonie-Server 4 übertragen. Dort wird anhand der zuvor beschriebenen Tabelle die erweiterte Kennung in eine im gesamten Kommunikationsnetz eindeutige Rufnummer nach kanonischem Format umgewertet und zusammen mit der Information über die Statusänderung der Ressource 5 an diejenige Anwendung 20 verschickt, die zuvor das Setzen des Monitorpunkts in der Kommunikationsanlage 1 veranlasst hat. Im Telephonie-Server 4 wird bei jedem Setzen von Monitorpunkten eine Liste aktualisiert, in der verzeichnet ist, welche Ressourcen 5-19 an welchen Kommunikationsanlagen 1, 2, 3 von welchen Anwendungen überwacht werden. Somit können Meldungen, die von den Kommunikationsanlagen 1, 2, 3 zum Telephonie-Server 4 verschickt werden, immer der oder den richtigen Anwendungen übermittelt werden.

Dass im Kommunikationsnetz auch die Ressourcen 10, 15 die Durchwahlnummer 100 als Kennzeichen verwenden, führt zu keiner Fehlzuleitung.

Am Telephonie-Server 4 können nicht nur Anwendungen 20 angeschlossen sein, die zur Unterscheidung von Ressourcen 5-19 die Rufnummern verwenden, also das Call-Control Linebezogen durchführen, sondern es sind auch Anwendungen anschliessbar, die zur Verwaltung von Ressourcen 5-19 an mehreren Kommunikationsanlagen 1, 2, 3 mit überlappenden Rufnummern bereits vorbereitet sind. Die erweiterten Kennzeichen von Meldungen, die der Telephonie-Server 4 solchen Anwendungen übermittelt, werden nicht in eine vollständige Rufnummer nach kanonischem Format umgewertet, sondern die Anwendung selbst übernimmt die getrennte Verwaltung von Ressource-ID und Node-ID. Dennoch kann es auch beim Betrieb solcher Anwendungen erforderlich sein, dass der Telephonie-Server 4 die Node-ID der Kommunikationsanlage 1, 2, 3 in eine andere Ziffern- oder Zeichenfolge umsetzt. Das ist dann der Fall, wenn die Information über den Kommunikationsknoten zwischen der Anwendung und dem Telephonie-Server 4 in einem anderen Datenformat übertragen wird, als das Datenformat, welches für die Übertragung der Informationen zwischen dem Telephonie-Server 4 und den Kommunikationsanlagen 1, 2, 3 verwendet wird.

Beim erstmaligen Start des Telephonie-Servers 4 bzw. nach jeder Änderung der Topologie des Kommunikationsnetzes fragt der Telephonie-Server 4 mit Hilfe einer speziellen Funktion bei jeder angeschlossenen Kommunikationsanlage 1, 2, 3 einen Datensatz ab, aus dem hervorgeht, welche Funktionalität bezüglich des Call-Controls von jeder der Kommunikationsanlagen 1, 2, 3 unterstützt wird. Falls alle Kommunikationsanlagen 1, 2, 3 das Verfahren zur Erweiterung des Kennzeichens, also der Ressource-ID, mit einer Node-ID beherrschen, wird die Verwendung dieses Verfahrens in allen Kommunikationsanlagen 1, 2, 3 und dem Telephonie-Server 4 eingeschaltet. Das ist die Voraussetzung dafür, dass an verschiedenen Kommunikationsanlagen 1, 2, 3 Ressourcen 5-19 identische Kennzeichen, man sagt auch "überlappende Ressource-IDs", verwenden können. Damit ist die Mindestlänge der Durchwahlnummern nicht von der Gesamtzahl der Teilnehmer im Kommunikationsnetz, sondern nur von der Anzahl der Teilnehmer in der jeweiligen Kommunikationsanlage 1, 2, 3 abhängig.

## Patentansprüche

1. System mit mindestens zwei Kommunikationsanlagen (1, 2, 3), die jeweils Ressourcen (5-19) verwalten,
wobei den Ressourcen (5-19) jeweils eine Durchwahlnummer (100-7899) zur Identifikation zugeordnet ist und wobei die von einer einzelnen Kommunikationsanlage (1, 2, 3) verwalteten Ressourcen (5-19) anhand ihrer Durchwahlnummern (100-7899) unterscheidbar sind, und
mit mindestens einer Anwendung (20) zur Steuerung und/oder Überwachung der Ressourcen (5-19) mittels Übertragung von die Durchwahlnummer (100-7899) der betreffenden Ressource (5-19) umfassenden Meldungen zwischen der mindestens einen Anwendung und den Kommunikationsanlagen (1, 2, 3),
wobei die Kommunikationsanlagen (1, 2, 3) die Meldungen mit der mindestens einen Anwendung (20) über einen Telefonie-Server (4) austauschen,
**dadurch gekennzeichnet,**
**dass** eine Erweiterung aller Durchwahlnummern (100-7899) zur Unterscheidung der Ressourcen (5-19) vorgesehen ist, die zumindest von jeder Kommunikationsanlage (1, 2, 3) beim Versenden von Meldungen vorgenommen wird und eine eindeutige Kennung (@1, @2, @3), jedoch nicht die Anlagenrufnummer, der versendenden Kommunikationsanlage (1, 2, 3) umfasst, zumindest jeweils dann, wenn mehrere Ressourcen (5-19) die gleiche nicht erweiterte Durchwahlnummer(100-7899) aufweisen, dass die so erweiterten Durchwahlnummern, die von den Kommunikationsanlagen (1, 2, 3) zum Telefonie-Server (4) übertragen werden, vom Telefonie-Server (4) in eine im gesamten System eindeutige Rufnummer im internationalen Format umgesetzt und zusammen mit den Meldungen zu der mindestens einen Anwendung (20) übertragen wird,
wodurch für die Benutzer oder Teilnehmer sichergestellt wird, dass die innerhalb einer Kommunikationsanlage gut handhabbaren Durchwahlnummern, auch bei mehreren oder bei Hinzuschaltung weiterer Kommunikationsanlagen beibehalten werden können.

2. System nach Anspruch 1,
**dadurch gekennzeichnet,**
**dass** mindestens eine Anwendung (20) eine CTI-Anwendung (CTI = Computer Telephony Integration) ist.

3. System nach Anspruch 1 oder 2,
**dadurch gekennzeichnet,**
**dass** die mindestens eine Anwendung (20) die Meldungen in einem im TAPI-Protokoll (TAPI = Telephony Application Programming Interface) oder CSTA-Phase-III-Protokoll (CSTA = Computer Supported Telephony Application) definierten Datenformat austauscht.

4. System nach einem der Ansprüche 1 bis 3,
**dadurch gekennzeichnet,**
**dass** die Nutzung oder Nichtnutzung erweiterter Durchwahlnummern im Telefonie-Server (4) und/oder den Kommunikationsanlagen (1, 2, 3) als Betriebsmodus auswählbar ist.

5. System nach einem der Ansprüche 1 bis 4,
**dadurch gekennzeichnet,**
**dass** die Möglichkeit der Nutzung von Durchwahlnummern (100-7899), die um die eindeutige Kennung (@1, @2, @3) erweitert sind, von der zumindest einen Anwendung (20) bei dem Telefonie-Server (4) oder bei einer Kommunikationsanlage (1, 2, 3) abgefragt werden kann und die Nutzung der Erweiterung der Durchwahlnummern(100-7899) von der zumindest einen Anwendung (20) an- und abschaltbar ist.

6. System nach einem der Ansprüche 1 bis 5,
**dadurch gekennzeichnet,**
**dass** die nicht erweiterte Durchwahlnummer (100-7899) der Ressource (5-19) in einem Datenformat dargestellt ist, welches dem SFR-Format (SFR = Switching Function Representation) des Standards ECMA-269 entspricht.

7. Verfahren zum Betreiben eines Systems mit mindestens zwei Kommunikationsanlagen (1, 2, 3), die jeweils Ressourcen (5-19) verwalten,
wobei den Ressourcen (5-19) jeweils eine Durchwahlnummer (100-7899) zur Identifikation zugeordnet ist und wobei die von einer einzelnen Kommunikationsanlage (1, 2, 3) verwalteten Ressourcen (5-19) anhand ihrer Durchwahlnummern (100-7899) unterscheidbar sind, und
mit mindestens einer Anwendung (20) zur Steuerung und/oder Überwachung der Ressourcen (5-19) mittels Übertragung von die Durchwahlnummer (100-7899) der betreffenden Ressource (5-19) umfassenden Meldungen zwischen der mindestens einen Anwendung und den Kommunikationsanlagen (1, 2, 3),
wobei die Kommunikationsanlagen (1, 2, 3) die Meldungen mit der mindestens einen Anwendung (20) über einen Telefonie-Server (4) austauschen,
**dadurch gekennzeichnet,**
**dass** eine Erweiterung aller Durchwahlnummern (100-7899) zur Unterscheidung der Ressourcen (5-19) vorgesehen ist, die zumindest von jeder Kommunikationsanlage (1, 2, 3) beim Versenden von Meldungen vorgenommen wird und eine eindeutige Kennung (@1, @2, @3), jedoch nicht die Anlagenrufnummer, der versendenden Kommunikationsanlage (1, 2, 3) umfasst, zumindest jeweils dann, wenn mehrere Ressourcen (5-19) die gleiche nicht erweiterte Durchwahlnummer (100-7899) aufweisen,
**dass** die so erweiterten Durchwahlnummern, die von den Kommunikationsanlagen (1, 2, 3) zum Telefonie-Server (4) übertragen werden, vom Telefonie-Server (4) in eine im gesamten System eindeutige Rufnummer im internationalen Format umgesetzt und zusammen mit den Meldungen zu der mindestens einen Anwendung (20) übertragen wird,
wodurch für die Benutzer oder Teilnehmer sichergestellt wird, dass die innerhalb einer Kommunikationsanlage gut handhabbaren Durchwahlnummern, auch bei mehreren oder bei Hinzuschaltung weiterer Kommunikationsanlagen beibehalten werden können.

8. Verfahren nach Anspruch 7,
**dadurch gekennzeichnet,**
**dass** mindestens eine Anwendung (20) eine CTI-Anwendung (CTI = Computer Telephony Integration) ist.

9. Verfahren nach Anspruch 7 oder 8,
**dadurch gekennzeichnet,**
**dass** die mindestens eine Anwendung (20) die Meldungen in einem im TAPI-Protokoll (TAPI = Telephony Application Programming Interface) oder CSTA-Phase-III-Protokoll (CSTA = Computer Supported Telephony Application) definierten Datenformat austauscht.

10. Verfahren nach einem der Ansprüche 7 bis 9,
**dadurch gekennzeichnet,**
**dass** die Nutzung oder Nichtnutzung erweiterter Durchwahlnummern im Telefonie-Server (4) und/oder den Kommunikationsanlagen (1, 2, 3) als Betriebsmodus auswählbar ist.

11. Verfahren nach einem der Ansprüche 7 bis 10,
**dadurch gekennzeichnet,**
**dass** die Möglichkeit der Nutzung von Durchwahlnummern (100-7899), die um die Kennung (@1, @2, @3) erweitert sind, von der zumindest einen Anwendung (20) bei dem Telefonie-Server (4) oder bei einer Kommunikationsanlage (1, 2, 3) abgefragt werden kann und die Nutzung der Erweiterung der Durchwahlnummern (100-7899) von der zumindest einen Anwendung (20) an- und abschaltbar ist.

12. Verfahren nach einem der Ansprüche 7 bis 11,
**dadurch gekennzeichnet,**
**dass** die nicht erweiterte Durchwahlnummer (100-7899) der Ressource (5-19) in einem Datenformat dargestellt ist, welches dem SFR-Format (SFR = Switching Function Representation) des Standards ECMA-269 entspricht.

13. System nach Anspruch 1 und Verfahren nach Anspruch 7,
**dadurch gekennzeichnet,**
**dass** der Telefonie-Server (4) die Kennung dazu verwendet, der mindestens einen Anwendung (20) die Meldungen mit der Anlagenrufnummer versehen zu übermitteln, welches die Rufnummer der Ressource (5-19) in internationalem Format umfasst.

## Claims

1. System with at least two communication systems (1, 2, 3) each of which manages resources (5-19),
wherein the resources (5-19) are each associated with a direct dial number (100-7899) for identification and wherein the resources (5-19) managed by an individual communication system (1, 2, 3) can be distinguished based on their direct dial numbers (100-7899), and
with at least one application (20) for controlling and/or monitoring the resources (5-19) by transmitting messages comprising the direct dial number (100-7899) of the resource (5-19) concerned between the at least one application and the communication systems (1, 2, 3),
wherein the communication systems (1, 2, 3) exchange the messages with the at least one application (20) via a telephony server (4),
**characterized in**
**that** an extension of all the direct dial numbers (100-7899) for distinguishing the resources (5-19) is provided, which is carried out at least by each communication system (1, 2, 3) at the time of the sending of messages and which comprises a unique identification (@1, @2, @3), but not the system call number, of the sending communication system (1, 2, 3),
at least in each case when several resources (5-19) have the same unextended direct dial number (100-7899),
in that the thus extended direct dial numbers, which are transmitted by the communication systems (1, 2, 3) to the telephony server (4), are converted by the telephony server (4) into a call number that is unique in the entire system, in the international format, and are transmitted together with the messages to the at least one application (20),
as a result of which it is ensured for the users or subscribers that the easy-to-manage direct dial numbers within one communication system can also be kept in the case of several communication systems or in the case of the additional switching-on of additional communication systems.

2. System according to Claim 1,
**characterized in**
**that** at least one application (20) is a CTI application (CTI = Computer Telephony Integration).

3. System according to Claim 1 or 2,
**characterized in**
**that** the at least one application (20) exchanges the messages in a data format defined in the TAPI protocol (TAPI = Telephony Application Programming Interface) or CSTA Phase III protocol (CSTA = Computer Supported Telephony Application).

4. System according to any one of Claims 1 to 3,
**characterized in**
**that** the use or non-use of extended direct dial numbers in the telephony server (4) and/or the communication systems (1, 2, 3) can be selected as operating mode.

5. System according to any one of Claims 1 to 4,
**characterized in**
**that** the possibility of using direct dial numbers (100-7899) which are extended by the unique identification (@1, @2, @3) can be queried by the at least one application (20) in the telephony server (4) or in a communication system (1, 2, 3), and the use of the extension of the direct dial numbers (100-7899) can be switched on and off by the at least one application (20).

6. System according to any one of Claims 1 to 5,
**characterized in**
**that** the unextended direct dial number (100-7899) of the resource (5-19) is represented in a data format which corresponds to the SFR format (SFR = Switching Function Representation) of the standard ECMA-269.

7. Method for operating a system with at least two communication systems (1, 2, 3) each of which manages resources (5-19),
wherein the resources (5-19) are each associated with a direct dial number (100-7899) for identification and wherein the resources (5-19) managed by means of an individual communication system (1, 2, 3) can be distinguished based on their direct dial numbers (100-7899), and
with at least one application (20) for controlling and/or monitoring the resources (5-19) by transmitting messages comprising the direct dial number (100-7899) of the resource (5-19) concerned between the at least one application and the communication systems (1, 2, 3),
wherein the communication systems (1,2, 3) exchange the messages with the at least one application (20) via a telephony server (4),
**characterized in**
**that** an extension of all the direct dial numbers (100-7899) for distinguishing the resources (5-19) is provided, which is carried out at least by each communication system (1, 2, 3) at the time of the sending of messages and which comprises a unique identification (@1, @2, @3), but not the system call number, of the sending communication system (1, 2, 3),
at least in each case when several resources (5-19) have the same unextended direct dial number (100-7899),
in that the thus extended direct dial numbers, which are transmitted by the communication systems (1, 2, 3) to the telephony server (4), are converted by the telephony server (4) into a call number that is unique in the entire system, in the international format, and are transmitted together with the messages to the at least one application (20),
as a result of which it is ensured for the users or subscribers that the easy-to-manage direct dial numbers within a communication system can also be kept in the case of several communication systems or in the case of the additional switching-on of additional communication systems.

8. Method according to Claim 7,
**characterized in**
**that** at least one application (20) is a CTI application (CTI = Computer Telephony Integration).

9. Method according to Claim 7 or 8,
**characterized in**
**that** the at least one application (20) exchanges the messages in a data format defined in the TAPI protocol (TAPI = Telephony Application Programming Interface) or CSTA Phase III protocol (CSTA = Computer Supported Telephony Application).

10. Method according to any one of Claims 7 to 9,
**characterized in**
**that** the use or nonuse of extended direct dial numbers in the telephony server (4) and/or the communication systems (1, 2, 3) can be selected as operating mode.

11. Method according to any one of Claims 7 to 10,
**characterized in**
**that** the possibility of using direct dial numbers (100-7899) which are extended by the unique identification (@1, @2, @3) can be queried by the at least one application (20) in the telephony server (4) or in a communication system (1, 2, 3), and the use of the extension of the direct dial numbers (100-7899) can be switched on and off by the at least one application (20).

12. Method according to any one of Claims 7 to 11,
**characterized in**
**that** the unextended direct dial number (100-7899) of the resource (5-19) is represented in a data format which corresponds to the SFR format (SFR = Switching Function Representation) of the standard ECMA-269.

13. System according to Claim 1 and method according to Claim 7,
**characterized in**
**that** the telephony server (4) uses the identification for transmitting to the at least one application (20) the messages provided with the system call number which comprises the call number of the resource (5-19) in the international format.

## Revendications

1. Système ayant au moins deux systèmes de communication (1, 2, 3), chacun gérant des ressources (5-19),
dans lequel les ressources (5-19) sont chacune associée à un numéro d'appel direct (100-7899) pour l'identification et dans lequel les ressources (5-19) gérées par un système de communication individuel (1, 2, 3) peuvent être différenciées sur la base de leurs numéros d'appel directs (100-7899), et
ayant au moins une application (20) pour contrôler et/ou surveiller les ressources (5-19) en transmettant des messages comprenant le numéro d'appel direct (100-7899) de la ressource (5-19) concernée entre l'au moins une application et les systèmes de communication (1, 2, 3),
dans lequel les systèmes de communication (1, 2, 3) échangent les messages avec l'au moins une application (20) par le biais d'un serveur de téléphonie (4),
**caractérisé en ce**
**qu'**il est prévu une extension de tous les numéros d'appel direct (100-7899) pour différencier les ressources (5-19), qui est réalisée au moins par chaque système de communication (1, 2, 3) au moment de l'envoi de messages et qui comprend une identification unique (@1, @2, @3), mais pas le numéro d'appel du système, du système de communication expéditeur (1, 2, 3),
**qu'**au moins dans chaque cas lorsque plusieurs ressources (5-19) ont le même numéro d'appel direct non étendu (100-7899),
les numéros d'appel directs ainsi étendus, qui sont transmis par les systèmes de communication (1, 2, 3) au serveur de téléphonie (4), sont convertis par le serveur de téléphonie (4) en un numéro d'appel qui est unique dans l'ensemble du système, au format international, et sont transmis conjointement avec les messages à l'au moins une application (20),
suite à quoi il est garanti aux utilisateurs ou abonnés que les numéros d'appel directs faciles à gérer au sein d'un seul système de communication peuvent également être conservés dans le cas de plusieurs systèmes de communication ou dans le cas de l'activation supplémentaire de systèmes de communication supplémentaires

2. Système selon la revendication 1,
**caractérisé en ce**
**qu'**au moins une application (20) est une application CTI (CTI = Couplage téléphonie-informatique).

3. Système selon la revendication 1 ou 2,
**caractérisé en ce que**
l'au moins une application (20) échange les messages dans un format de données défini dans le protocole TAPI (TAPI = Interface de programmation d'applications de téléphonie) ou le protocole CSTA de phase III (Application de téléphonie assistée par ordinateur).

4. Système selon l'une quelconque des revendications 1 à 3,
**caractérisé en ce que**
l'utilisation ou la non-utilisation des numéros d'appel direct étendus dans le serveur de téléphonie (4) et/ou les systèmes de communication (1, 2, 3) peut être sélectionnée comme mode de fonctionnement.

5. Système selon l'une quelconque des revendications 1 à 4,
**caractérisé en ce que**
la possibilité d'utilisation de numéros d'appel direct (100-7899) qui sont étendus par l'identification unique (@1, @2, @3) peut être demandée par l'au moins une application (20) dans le serveur de téléphonie (4) ou dans un système de communication (1, 2, 3), et l'utilisation de l'extension des numéros d'appel directs (100-7899) peut être activée et désactivée par l'au moins une application (20).

6. Système selon l'une quelconque des revendications 1 à 5,
**caractérisé en ce que**
le numéro d'appel direct non étendu (100-7899) de la ressource (5-19) est représenté dans un format de données qui correspond au format SFR (SFR = Représentation de fonction de commutation) de la norme ECMA-269.

7. Procédé d'exploitation d'un système ayant au moins deux systèmes de communication (1, 2, 3), chacun gérant des ressources (5-19),
dans lequel les ressources (5-19) sont chacune associée à un numéro d'appel direct (100-7899) pour l'identification et dans lequel les ressources (5-19) gérées au moyen d'un système de communication individuel (1, 2, 3) peuvent être différenciées sur la base de leurs numéros d'appel direct (100-7899), et
ayant au moins une application (20) pour contrôler et/ou surveiller les ressources (5-19) en transmettant des messages comprenant le numéro d'appel direct (100-7899) de la ressource (5-19) concernée entre l'au moins une application et les systèmes de communication (1, 2, 3),
dans lequel les systèmes de communication (1, 2, 3) échangent les messages avec l'au moins une application (20) par le biais d'un serveur de téléphonie (4),
**caractérisé en ce**
**qu'**il est prévu une extension de tous les numéros d'appel direct (100-7899) pour distinguer les ressources (5-19), qui est réalisée au moins par chaque système de communication (1, 2, 3) au moment de l'envoi de messages et qui comprend une identification unique (@1, @2, @3), mais pas le numéro d'appel du système, du système de communication expéditeur (1, 2, 3),
au moins dans chaque cas lorsque plusieurs ressources (5-19) ont le même numéro d'appel direct non étendu (100-7899),
les numéros d'appel directs ainsi étendus, qui sont transmis par les systèmes de communication (1, 2, 3) au serveur de téléphonie (4), sont convertis par le serveur de téléphonie (4) en un numéro d'appel qui est unique dans l'ensemble du système, au format international, et sont transmis conjointement avec les messages à l'au moins une application (20),
suite à quoi il est garanti aux utilisateurs ou abonnés que les numéros d'appel directs faciles à gérer au sein d'un seul système de communication peuvent également être conservés dans le cas de plusieurs systèmes de communication ou dans le cas de l'activation supplémentaire de systèmes de communication supplémentaires.

8. Procédé selon la revendication 7,
**caractérisé en ce**
**qu'**au moins une application (20) est une application de CTI (CTI = Couplage téléphonie-informatique).

9. Procédé selon la revendication 7 ou 8,
**caractérisé en ce que**
l'au moins une application (20) échange les messages dans un format de données défini dans le protocole TAPI (TAPI = Interface de programmation d'application de e téléphonie) ou le protocole CSTA de phase III (CSTA = Application de téléphonie assistée par ordinateur).

10. Procédé selon l'une quelconque des revendications 7 à 9,
**caractérisé en ce que**
l'utilisation ou la non-utilisation des numéros d'appel directs étendus dans le serveur de téléphonie (4) et/ou les systèmes de communication (1, 2, 3) peut être sélectionnée comme mode de fonctionnement.

11. Procédé selon l'une quelconque des revendications 7 à 10,
**caractérisé en ce que**
la possibilité d'utilisation de numéros d'appel direct (100-7899) qui sont étendus par l'identification unique (@1, @2, @3) peut être demandée par l'au moins une application (20) dans le serveur de téléphonie (4) ou dans un système de communications (1, 2, 3), et l'utilisation de l'extension des numéros d'appel direct (100-7899) peut être activée et désactivée par l'au moins une application (20).

12. Procédé selon l'une quelconque des revendications 7 à 11,
**caractérisé en ce que**
le numéro d'appel direct non étendu (100-7899) de la ressource (5-19) est représenté dans un format de données qui correspond au format SFR (SFR = Représentation de fonction de commutation) de la norme ECMA-269.

13. Système selon la revendication 1 et procédé selon la revendication 7,
**caractérisé en ce que**
le serveur de téléphonie (4) utilise l'identification pour transmettre à l'au moins une application (20) les messages pourvus du numéro d'appel du système qui comprend le numéro d'appel de la ressource (5-19) au format international.
